# EUROPEAN PATENT APPLICATION

(11) **EP 3 173 225 A1**
(43) Date of publication of application: **31.05.2017**
(21) Application number: 14897908.1
(22) Date of filing: 05.09.2014
(51) Int. Cl.: B30B 15/06, B30B 15/34

(54) **HOT PLATE STRUCTURE OF PRESS MOLDING DEVICE AND CONTINUOUS MOLDING METHOD USING SAME**

(30) Priority: 25.07.2014 KR 20140095017
(71) Applicant: Jeil E & S Co. Ltd., Yangsan-si, Gyeongsangnam-do 626-230 (KR)
(72) Inventor: KIM, Chi Yeon, Seoul 121-773 (KR); KIM, Gun Ho, Busan 612-795 (KR)
(74) Representative: Zardi, Marco
(86) International application number: PCT/KR2014/008398
(87) International publication number: WO 2016/013714

(57) **Abstract**

The present invention relates to a hot plate structure of a press molding device, and a continuous molding method using the same. The continuous molding method continuously performs primary and secondary overlapping molding operations on the basis of a length unit which is smaller than a set length unit (cutting width) and accordingly cancels out a boundary part, thereby being capable of improving the thickness difference of the boundary part and thus enabling uniform physical properties to be obtained. The hot plate structure comprises a protrusion part which protrudes by lengthening both sides of a hot plate to the outside of a chamber, wherein the protrusion part is formed at a thinner thickness than the thickness of the hot plate within the chamber so that the pressure and temperature applied to the protrusion part are lower than the pressure and temperature applied through the hot plate within the chamber even if the molding operations are performed with the same time and conditions (pressure, temperature, etc.), whereby due to air cooling and temperature control effects, sheet transformation can be inhibited and bubbling can be controlled during the continuous operations through the aforesaid secondary overlapping molding operation.

## Description

### Technical Field

The present invention relates to a hot plate structure of a press molding device including a protrusion part which protrudes by lengthening both sides of the hot plate to the outside of a chamber, characterized in that the protrusion part is formed at a thinner thickness than the thickness of the hot plate within the chamber, and a continuous molding method using the hot plate structure, characterized by continuously performing primary and secondary overlapping molding operations on the basis of a length unit which is smaller than a set length unit (cutting width).

### Background Art

In general, press molding devices refer to devices inserting various sheet materials, heating them, and applying pressure thereto to mold them integrally. Press molding devices with various structures have already been disclosed. As relevant prior art, there are Korean Patent Laid-open No. 10-2000-0028590 relating to "hot press method and device thereof," Korean Utility Model Registration No. 20-0282359 relating to "multi-stair press for manufacturing shoe-soles," etc.

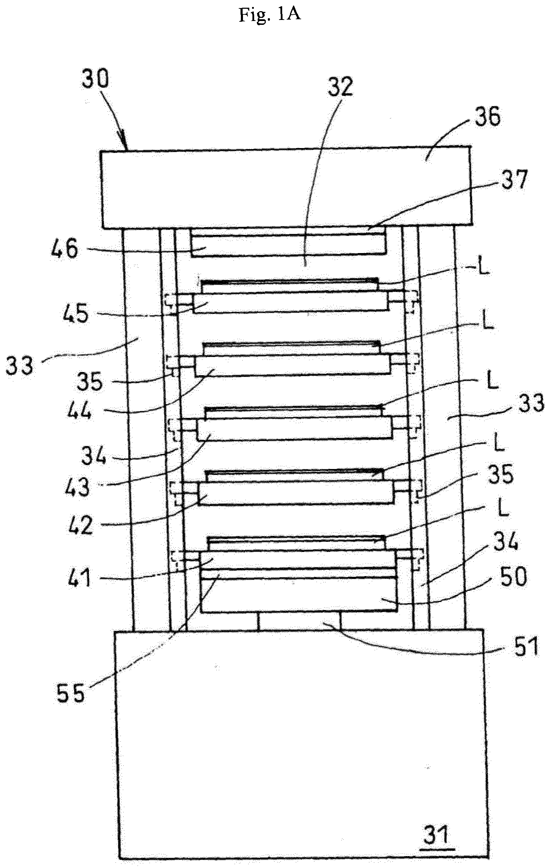

Specifically, as illustrated in Fig. 1(a), the press molding device according to Korean Patent Laid-open No. 10-2000-0028590 relating to "hot press method and device thereof" discloses the technology of sequentially lifting plural heat plates by a rise of a mobile shelf in a base chamber, heating and compressing the material to be processed inserted into the gap between the heat plates to be integrally piled, making the diameter of a section of a RAM of the mobile shelf approximately the same as a length of one side of the mobile shelf, making the size of the heat plate approximately the same as the one of the mobile shelf, and putting the material to be processed on a sectional area of the RAM to heat, compress and combine to laminate the material.

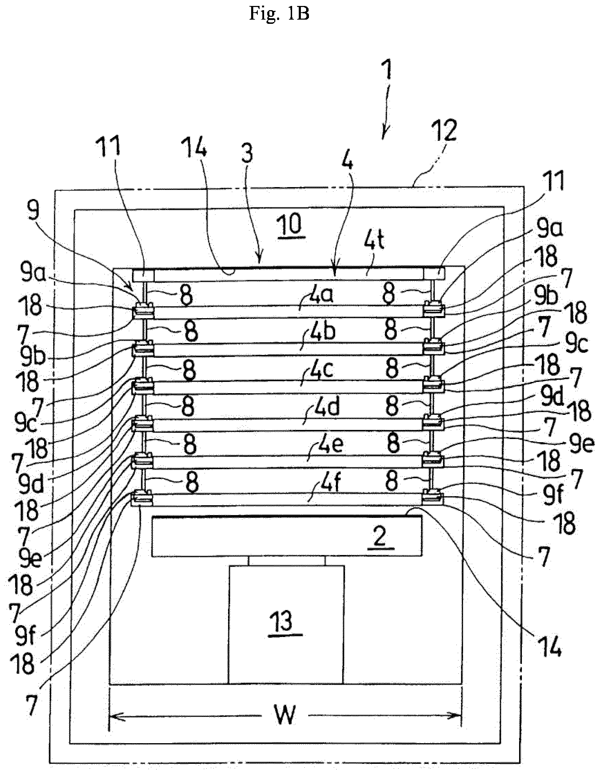

Further, as illustrated in Fig. 1(b), the press molding device according to Korean Patent Laid-open No. 10-2002-0081084 relating to "multistage press equipment" discloses a multistage press molding device installing heat plates or press plates in multi-stage between movable plates and fixed plates within a chamber, carrying the material to be laminated laying on carrier plates to a space between the heat plates or press plates, moving the movable plates towards the fixed plates, and compressing the material to be laminated on the carrier plates arranged between the heat plates or press plates to be laminated and molded integrally, wherein a pair of guide brackets at predetermined intervals are arranged and installed on both side surfaces of the heat plates or press plates, floating bars extended to the carrying direction of the carrier plate as a pair of hanged shafts vertically installed on the pair of guide brackets are hanged and maintained, and by the pair of floating bars arranged in the width direction of carrier plate, the heat plate or press plate right below the corresponding heat plate or press plate is supported, and at the same time, the carrier plate right above the supported heat plate or press plate is supported in a state of floating from the heat plate or press plate.

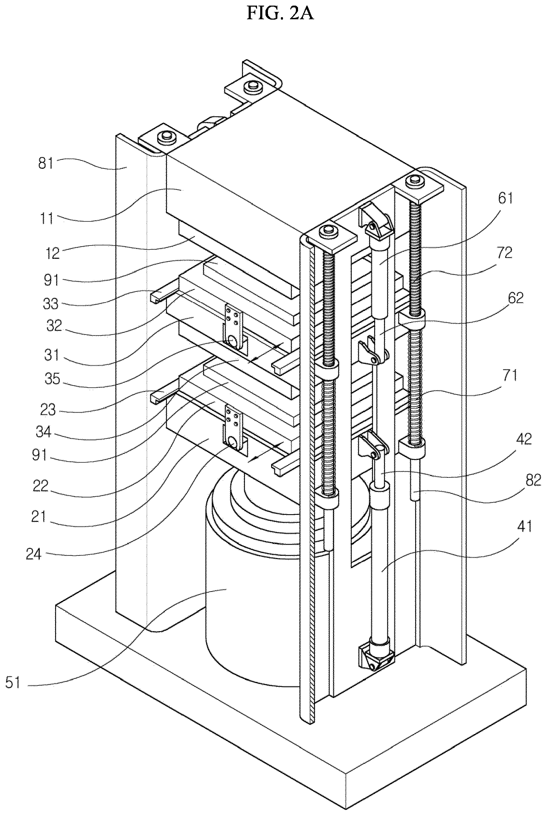

Also, as illustrated in Fig. 2(a), the press molding device according to Korean Patent Laid-open No. 10-2005-0112680 relating to "press having heating means" discloses a heating and pressurizing molding machine including an upper plate to which an upper hot plate is fixed; a lower plate to which a lower hot plate is fixed, deformed upward by a high speed and low pressure cylinder and a low speed and high pressure cylinder; and a middle plate to which middle upper and lower hot plates are fixed, positioned between the upper and lower plates, wherein the lower plate is propped up by the low speed and high pressure cylinder and fixed to be deformed vertically by a side guide, the middle plate is fixed to be vertically changed by the side guide, the upper plate is fixed by a support post, a first spring is mounted around the side guide between the middle and lower plates to be penetrated by the side guide, and a second spring is installed around the side guide between the upper and middle plates to be penetrated by the side guide.

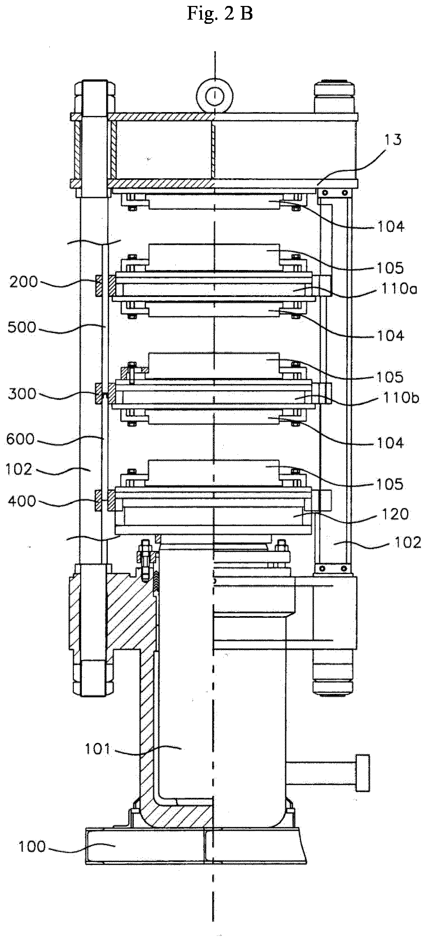

Furthermore, as illustrated in Fig. 2(b), the press molding device according to Korean Utility Model Registration No. 20-0282359 relating to "multi-stair press for manufacturing shoe-soles" discloses a multi-stair press simultaneously manufacturing a plurality of outsoles, wherein supporting pillars 102 are formed in four corners in the top surface of a frame 100 in which a RAM 101 is installed, in the upper end portion of the supporting pillar, a top plate 103 is installed, an upper die is provided in the bottom surface of the top plate, in its lower portion, two movable plates 110 movable up and down along the supporting pillar 102 by the combination of upper and lower dies are provided, and in the lowest portion of the supporting pillar, a lower plate 120 where a lower die is installed to press the movable plates, moving with the RAM, is provided. Also, the press molding device includes a first guide block 200 including a semicircle groove a so that an inner side surface of the first guide block is coupled to both end portions at left and right sides of the movable plate 110, and an outer side surface of the first guide block slides while contacting the supporting pillar 102, and an upper guide hole 210 perforated upwardly and downwardly between the two semicircle grooves a; a second block 300 including a semicircle groove a which is coupled to another movable plate located at the bottom portion of the movable plate 110 controlled by the first guide block 200 and contacts the supporting pillar, a middle guide hole 310 formed on the same axis as the upper guide hole 210 formed in the first guide block 200, and a tap 320 in the bottom surface adjacent to the middle guide hole; a third guide block 400 including a semicircle groove a so that an inner side surface is coupled to both end portions of the lower plate 120 coupled to the RAM, and an outer surface slide along the supporting pillar, a lower guide hole 410 perforated on the same axis as the upper guide hole 210 and middle guide hole 310 formed in the first guide block 200 and second guide block 300, and an auxiliary guide hole 420 perforated on the same axis as the tap 320 formed in the second guide block 300; a first rod-like guide bar 500, of which one end portion is fixed and installed from the top plate 103 and is installed while maintaining the same axis with the upper guide hole, middle guide hole and lower guide hole; and a second rod-like guide bar 600, of which one end portion is coupled and fixed to the tap 320 formed in the second guide block 300 and is installed while maintaining a state of being inserted into the auxiliary guide hole 420 formed in the third guide block 400, thereby precisely performing up and down movement of the lower plate and movable plate by the operation of RAM without shaking.

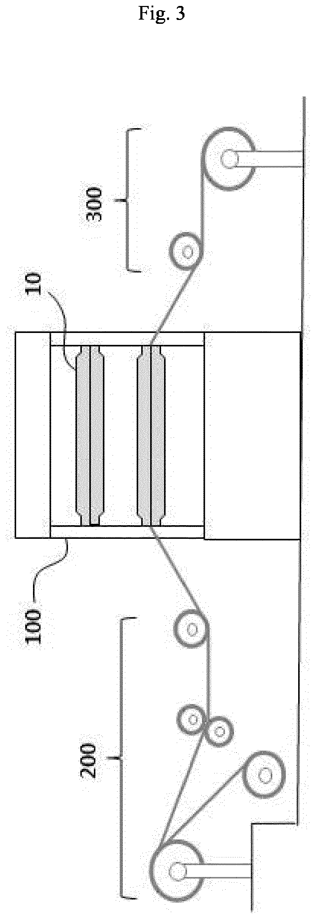

As can be known from the above-mentioned prior art, general press molding devices basically include a hot plate 10 within a chamber 100 as illustrated in Fig. 3. The hot plate 10, which is attached to the upper die or lower die or used as a pressing member itself, is an essential constitutional element for continuously molding a sheet material by heating and pressing it.

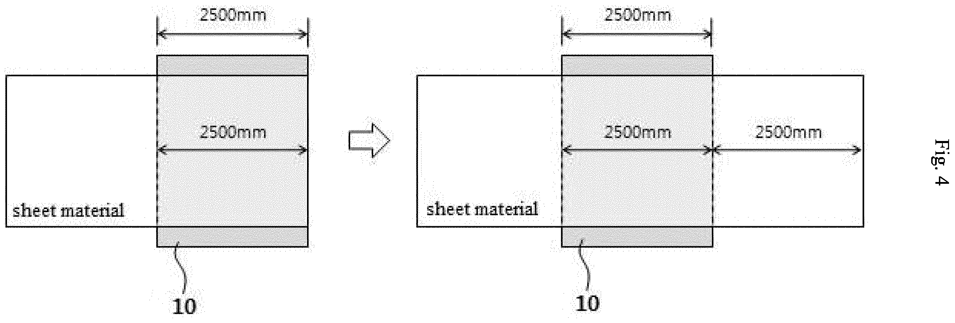

Meanwhile, upon reviewing the molding process more specifically, as illustrated in Figs. 3 and 4, the sheet material supplied from a supplying part 200 is primarily molded on the basis of a set length unit (cutting width, for example, 2500 mm) by using the hot plate 10, and is then transported to a loading part 300 to be stored therein.

However, the above prior art has the following problems.

First, according to prior art, primary molding is performed on the basis of a length unit which is the same as the cutting width. Thus, during continuous operation through the primary molding operation, a thickness difference occurs at the boundary parts for each unit, and accordingly, deviation in physical properties occur.

Second, in order to solve the above problem, primary and secondary molding could be performed. However, when performing primary and second moldings continuously with the structure of the conventional hot plate 10, there is no temperature controlling means through air cooling, and accordingly, sheet transformation by the heat and bubbling could not be controlled.

### Detailed Description of the Invention

### Technical Task

The present invention is to solve the above-mentioned problems. The task of the present invention is to continuously perform primary and secondary overlapping molding operations on the basis of a length unit which is smaller than a set length unit (cutting width), so as to cancel out a boundary part, thereby being capable of improving the thickness difference of the boundary part and thus enabling uniform physical properties to be obtained.

Also, another task of the present invention is to provide a hot plate structure including a protrusion part which protrudes by lengthening both sides of a hot plate to the outside of a chamber, wherein the protrusion part is formed at a thinner thickness than the thickness of the hot plate within the chamber so that the pressure and temperature applied to the protrusion part are lower than the pressure and temperature applied through the hot plate within the chamber even if the molding operations are performed with the same time and conditions (pressure, temperature, etc.), whereby due to air cooling and temperature control effects, sheet transformation can be inhibited and bubbling can be controlled during the continuous operations through the aforesaid secondary overlapping molding operation.

### Technical Means for Achieving the Technical Task

The present invention relates to a hot plate structure of a press molding device including a chamber 100 and a hot plate 10.

The present invention has the means for achieving the technical task of a hot plate structure of a press molding device, including a protrusion part 10a which protrudes by lengthening both sides of the hot plate 10 to the outside of the chamber 100, wherein the protrusion part 10a is formed at a thinner thickness than the thickness of the hot plate 10 within the chamber 100.

In this case, the protrusion part 10a is preferably formed at a thickness of 1/3 to 1/2 of the thickness of the hot plate 10 within the chamber 100.

Also, the present invention relates to a continuous molding method which performs molding by heating and compressing a sheet material supplied with a hot plate 10 including a protrusion part 10a, which includes the steps of performing primary molding by first supplying the sheet material on the basis of a length unit which is smaller than a set length unit (cutting width) (S100); performing secondary overlapping molding by supplying the primary molded part on the basis of a remaining length unit (S200); and performing air cooling molding by supplying the secondary overlapping molded part to the protrusion part 10a (S300), wherein the primary molding step (S100), secondary overlapping molding step (S200) and air cooling molding step (S300) are continuously performed through the entire sheet material supplied.

In this case, the supplied length unit of the sheet material preferably has a length unit of 1/4 to 1/2 of the set length unit (cutting width).

### Advantageous Effects

The present invention continuously performs primary and secondary overlapping molding operations on the basis of a length unit which is smaller than a set length unit (cutting width) and accordingly cancels out a boundary part, thereby being capable of improving the thickness difference of the boundary part and thus enabling uniform physical properties to be obtained. Also, the present invention includes a protrusion part which protrudes by lengthening both sides of a hot plate to the outside of a chamber, wherein the protrusion part is formed at a thinner thickness than the thickness of the hot plate within the chamber so that the pressure and temperature applied to the protrusion part are lower than the pressure and temperature applied through the hot plate within the chamber even if the molding operations are performed with the same time and conditions (pressure, temperature, etc.), whereby due to air cooling and temperature control effects, sheet transformation can be inhibited and bubbling can be controlled during the continuous operations through the aforesaid secondary overlapping molding operation.

### Brief Description of Drawings

Figs. 1 and 2 are views illustrating conventional press molding devices;
Fig. 3 is a view illustrating essential constitutional elements of a general press molding device;
Fig. 4 is a view illustrating a general continuous molding method;
Fig. 5 is a view illustrating a hot plate structure of a press molding device according to the present invention;
Fig. 6 is a flow chart illustrating a continuous molding method according to the present invention; and
Fig. 7 is a view illustrating the continuous molding method according to the present invention.

### Best Mode for Carrying out the Invention

The present invention for achieving the above effects relates to a hot plate structure of a press molding device and a continuous molding method using same. The detailed descriptions and illustration for the constitution and operation which can be easily known by a skilled person in the art from each drawing and detailed description, and specific technical constitution and operation of elements which are not directly associated with the technical characteristic of the present invention are briefly mentioned or omitted.

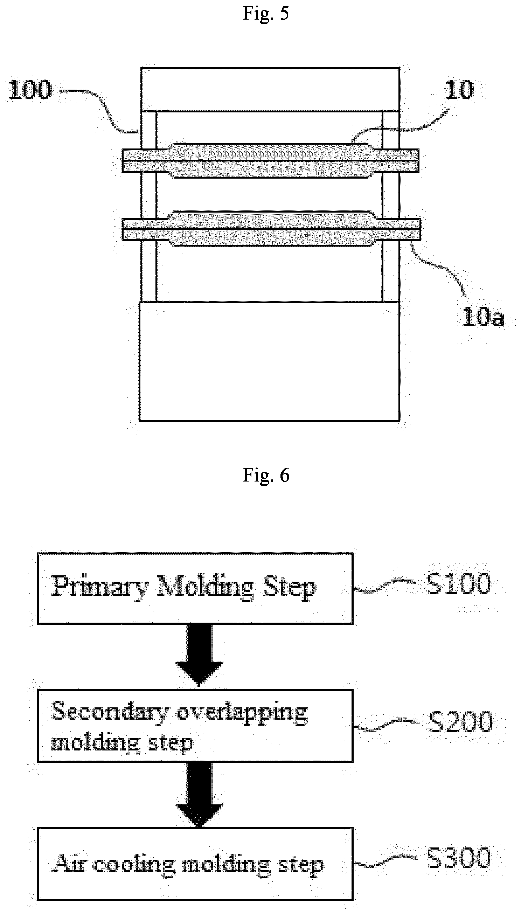

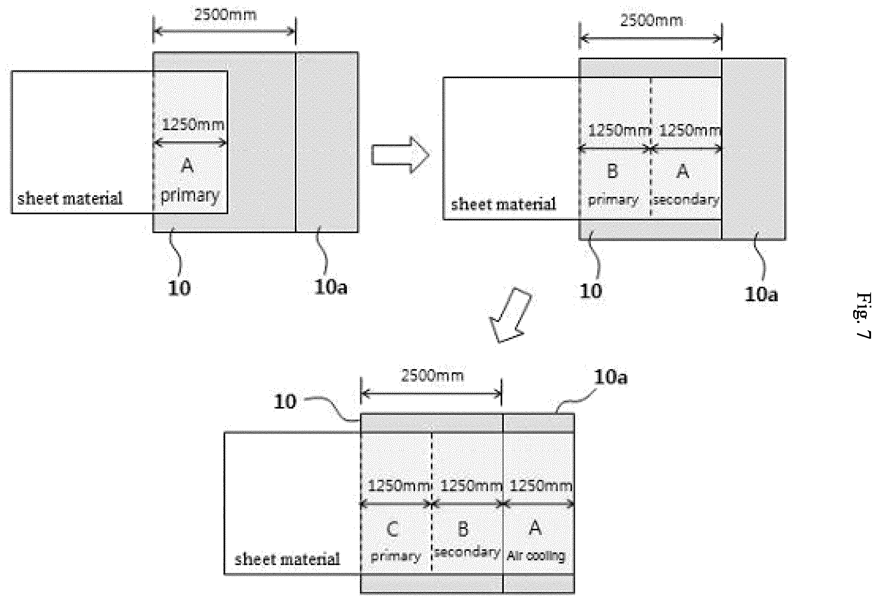

Fig. 5 is a view illustrating a hot plate structure of a press molding device according to the present invention, Fig. 6 is a flow chart illustrating a continuous molding method according to the present invention, and Fig. 7 is a view illustrating the continuous molding method according to the present invention. The hot plate structure of the press molding device and continuous molding method using same are described in detail with reference to the drawings above.

First, in terms of structure, as illustrated in Fig. 5, the hot plate structure of the press molding device according to the present invention, which includes a chamber 100 and a hot plate 10, includes a protrusion part 10a which protrudes by lengthening both sides of the hot plate 10 to the outside of the chamber 100, characterized in that the protrusion part 10a is formed at a thinner thickness than the thickness of the hot plate 10 within the chamber 100.

That is, the pressure and temperature applied to the protrusion part 10a are lower than the pressure and temperature applied through the hot plate 10 within the chamber 100 even if the molding operations are performed with the same time and conditions (pressure, temperature, etc.), whereby due to air cooling and temperature control effects, sheet transformation can be inhibited and bubbling can be controlled during the continuous operations through secondary overlapping molding operation to be described later.

In this case, it is preferable to manufacture the protrusion part 10a to have the thickness of 1/3 to 1/2 of the thickness of the hot plate 10 within the chamber 100 to efficiently exhibit the air cooling and temperature control effects, but the thickness is not limited thereto. The protrusion part may be set to have various thicknesses on the premise that the thickness is smaller than the thickness of the hot plate 10 within the chamber 100.

Meanwhile, the molding time and conditions (pressure, temperature, etc.) are commonly 3 to 15 minutes, 150 to 200°C, and 200 to 300 kg/cm², but are not limited thereto. The molding may be performed with various time and conditions in consideration of types, etc. of the sheet.

Also, the hot plate structure of the press molding device according to the present invention may be applied to a single press or a multi-stage press with at least two press means.

Next, in terms of molding method, the continuous molding method using the hot plate structure of the press molding device according to the present invention includes the primary molding step (S100), secondary overlapping molding step (S200) and air cooling molding step (S300), as illustrated in Fig. 6.

For more specific description, as illustrated in Fig. 7, one embodiment of the present invention below is on the basis of 2500 mm of set length unit (cutting width) and 1250 mm of supplied length unit of the sheet material.

In this case, the cutting width of the present invention is not limited to 2500 mm, but may be variously modified according to the types of sheet, purpose of use, etc. Additionally, the supplied length unit of the sheet material is not limited to 1250 mm, but may be variously modified on the premise that the length is smaller than the cutting width.

Referring to Fig. 7, in the primary molding step (S100), the sheet material is first supplied to the hot plate 10 on the basis of a unit of 1250 mm among the sheet materials whose cutting width is set to 2500 mm for primary molding.

Next, in the second overlapping molding step (S200), the primary molded part A is supplied on the basis of a remaining unit of 1250 mm for secondary overlapping molding. In this case, as the process is continuously performed, while the 'A' part is subjected to secondary overlapping molding, 'B' part connected thereto is subjected to primary molding.

That is, the "overlapping molding" means that while the 'A' part is subjected to secondary molding, the 'B' part connected thereto is subjected to primary molding. That is, as continuous overlapping molding is performed on the basis of a length unit of 1/4 to 1/2 of the cutting width, the boundary part becomes canceled out, thereby being capable of improving the thickness difference and thus enabling uniform physical properties to be obtained.

Next, in the air cooling step (S300), air cooling is performed as the secondary overlapping molded part A is supplied to the protrusion part 10a. The 'air cooling molding' means a molding step which has air cooling and temperature control effects, that is, a molding step wherein the protrusion part 10a is formed at a thinner thickness than the thickness of the hot plate 10 within the chamber 100 so that the pressure and temperature applied to the protrusion part 10a are lower than the pressure and temperature applied through the hot plate 10 within the chamber 100 even if the molding operations are performed with the same time and conditions (pressure, temperature, etc.), thereby implementing the air cooling and temperature control effects.

Furthermore, due to the air cooling molding step (S300), sheet transformation can be inhibited and bubbling can be controlled during the continuous operations through the secondary overlapping molding operation.

Meanwhile, the primary molding step (S100), secondary overlapping molding step (S200) and air cooling molding step (S300) are continuously performed through the entire sheet material supplied. That is, as illustrated in Fig. 7, when 'A' part of the sheet material is in the air cooling molding step (S300), 'B' part connected thereto goes through the secondary overlapping molding step (S200), and 'C' part connected thereto goes through the primary molding step (S100). The above step is continuously performed for other parts connected to the 'C' part, that is, through the entire sheet material.

Thus, by continuously performing the primary and secondary overlapping molding operations, the present invention can implement the effects of improving the thickness difference of the boundary part, enabling uniform physical properties to be obtained, and inhibiting sheet transformation and controlling bubbling through the air cooling molding to the protrusion part 10a.

As stated above, the present invention was described with reference to the preferred embodiments. However, it should be construed by a skilled person in the art that the present invention may be variously modified and changed within the range falling under the spirit and area of the present invention described in the claims below.

### Modes for Carrying out the Invention

As a mode for carrying out the invention, the present invention relates to a hot plate structure of a press molding device which includes a chamber 100 and a hot plate 10, the hot plate structure including a protrusion part 10a which protrudes by lengthening both sides of the hot plate 10 to the outside of the chamber 100, wherein the protrusion part 10a is formed at a thinner thickness than the thickness of the hot plate 10 within the chamber 100.

In this case, the protrusion part 10a is preferably formed at a thickness of 1/3 to 1/2 of the thickness of the hot plate 10 within the chamber 100.

Also, as another mode for carrying out the invention, the present invention relates to a continuous molding method which performs molding by heating and compressing a sheet material supplied with a hot plate 10 including a protrusion part 10a, which includes the steps of performing primary molding by first supplying the sheet material on the basis of a length unit which is smaller than a set length unit (cutting width) (S100); performing secondary overlapping molding by supplying the primary molded part on the basis of a remaining length unit (S200); and performing air cooling molding by supplying the secondary overlapping molded part to the protrusion part 10a (S300), wherein the primary molding step (S100), secondary overlapping molding step (S200) and air cooling molding step (S300) are continuously performed through the entire sheet material supplied.

In this case, the supplied length unit of the sheet material preferably has a length unit of 1/4 to 1/2 of the set length unit (cutting width).

### Industrial Applicability

The present invention continuously performs the primary and secondary overlapping molding operations on the basis of a length unit which is smaller than a set length unit (cutting width), and accordingly cancels out a boundary part, thereby being capable of improving the thickness difference of the boundary part and thus enabling uniform physical properties to be obtained. Additionally, the present invention includes a protrusion part which protrudes by lengthening both sides of a hot plate to the outside of a chamber, wherein the protrusion part is formed at a thinner thickness than the thickness of the hot plate within the chamber so that the pressure and temperature applied to the protrusion part are lower than the pressure and temperature applied through the hot plate within the chamber even if the molding operations are performed with the same time and conditions (pressure, temperature, etc.), whereby due to air cooling and temperature control effects, sheet transformation can be inhibited and bubbling can be controlled during the continuous operations through the aforesaid secondary overlapping molding operation. Accordingly, the present invention is expected to be industrially applicable.

## Claims

1. A hot plate structure of a press molding device including a chamber 100 and a hot plate 10, the hot plate structure comprising:
a protrusion part 10a which protrudes by lengthening both sides of the hot plate 10 to the outside of the chamber 100, wherein the protrusion part 10a is formed at a thinner thickness than the thickness of the hot plate 10 within the chamber 100.

2. The hot plate structure of claim 1, wherein the protrusion part 10a is formed at a thickness of 1/3 to 1/2 of the thickness of the hot plate 10 within the chamber 100.

3. A continuous molding method which performs molding by heating and compressing a sheet material supplied with a hot plate 10 including a protrusion part 10a, the method comprising:
performing primary molding by first supplying the sheet material on the basis of a length unit which is smaller than a set length unit (cutting width) (S100);
performing secondary overlapping molding by supplying the primary molded part on the basis of a remaining length unit (S200); and
performing air cooling molding by supplying the secondary overlapping molded part to the protrusion part 10a (S300),
wherein the primary molding step (S100), secondary overlapping molding step (S200) and air cooling molding step (S300) are continuously performed through the entire sheet material supplied.

4. The continuous molding method of claim 1, wherein the supplied length unit of the sheet material has a length unit of 1/4 to 1/2 of the set length unit (cutting width).
